# FASCICULE DE BREVET EUROPEEN

(11) **EP 4 314 511 B1**
(45) Date de publication et mention de la délivrance du brevet: **14.05.2025**
(21) Numéro de dépôt: 22716041.3
(22) Date de dépôt: 17.03.2022
(51) Int. Cl.: F01P 5/06, F01P 11/10, F01P 3/18, F01P 7/10, B60K 11/04, F04D 17/04, B60K 1/00, B60K 11/02, B60K 11/08

(54) **MODULE DE REFROIDISSEMENT POUR VEHICULE AUTOMOBILE ELECTRIQUE OU HYBRIDE**
KÜHLMODUL FÜR EIN ELEKTRO- ODER HYBRIDFAHRZEUG
COOLING MODULE FOR AN ELECTRIC OR HYBRID MOTOR VEHICLE

(30) Priorité: 25.03.2021 FR 2102985
(43) Date de publication de la demande: 07.02.2024
(73) Titulaire: VALEO SYSTEMES THERMIQUES, 78320 Le Mesnil Saint-Denis (FR)
(72) Inventeur: MAMMERI, Amrid, 78322 Le Mesnil-Saint-Denis Cedex (FR); AZZOUZ, Kamel, 78322 Le Mesnil-Saint-Denis Cedex (FR)
(74) Mandataire: Valeo Systèmes Thermiques
(86) Numéro de dépôt international: PCT/EP2022/056992
(87) Numéro de publication internationale: WO 2022/200167

(56) Documents cités:
- FR-A1- 3 093 760
- FR-A1- 3 100 584
- JP-A- S5 867 993
- JP-A- S55 100 403
- US-A1- 2013 101 408

## Description

La présente invention se rapporte à un module de refroidissement pour véhicule automobile électrique ou hybride, à turbomachine tangentielle.

Un module de refroidissement (ou module d'échange de chaleur) d'un véhicule automobile comporte classiquement au moins un échangeur de chaleur et un dispositif de ventilation adapté à générer un flux d'air au contact du au moins un échangeur de chaleur. Le dispositif de ventilation permet ainsi, par exemple, de générer un flux d'air au contact de l'échangeur de chaleur, à l'arrêt du véhicule ou à faible vitesse de roulage.

Classiquement, l'échangeur de chaleur est alors placé dans un compartiment en regard d'au moins deux baies de refroidissement, formées dans la face avant de la carrosserie du véhicule automobile. Une première baie de refroidissement est située au-dessus du pare-chocs tandis qu'une deuxième baie est située au-dessous du pare-chocs. Une telle configuration est préférée car le moteur thermique doit également être alimenté en air, l'admission d'air du moteur étant classiquement situé dans le passage du flux d'air traversant la baie de refroidissement supérieure.

Selon les différents véhicules, ce compartiment peut être plus ou moins réduit en taille et encombré par des obstacles pouvant gêner l'évacuation du flux d'air le traversant. Cela est particulièrement le cas lorsque le flux d'air est généré par le dispositif de ventilation. Il est ainsi nécessaire d'augmenter la taille et/ou la puissance de ce dispositif de ventilation afin que le flux d'air soit suffisant pour que les échanges thermiques se fassent correctement au niveau du ou des échangeurs de chaleur. Cette solution n'est pas la plus optimale car elle est énergivore et peut entamer l'autonomie du véhicule électrique ou hybride. De plus une telle solution entraîne une augmentation du poids du module de refroidissement.

Le document FR3100584A1 divulgue un module de refroidissement selon le préambule de la revendication 1.

Le but de la présente invention est donc de remédier au moins partiellement aux inconvénients de l'art antérieur et de proposer un module de refroidissement amélioré permettant des performances optimales en limitant sa consommation en énergie ainsi que son encombrement.

La présente invention concerne donc un module de refroidissement pour véhicule automobile électrique ou hybride, ledit module de refroidissement étant destiné à être traversé par un flux d'air et comportant :
- un carénage formant un canal interne traversé par le flux d'air entre une extrémité amont et une extrémité aval opposées l'une à l'autre, ledit carénage comportant au moins un échangeur de chaleur,
- un premier boîtier colleteur disposé en aval du carénage selon une direction longitudinale du module de refroidissement allant de l'avant vers l'arrière dudit module de refroidissement, ledit premier boîtier collecteur comportant une paroi de guidage faisant face à l'échangeur de chaleur aval du carénage, ladite paroi de guidage étant destinée à guider le flux d'air vers une turbomachine tangentielle configurée de sorte à générer ledit flux d'air, ladite turbomachine tangentielle comportant une volute comprenant une sortie du flux d'air, le module de refroidissement comportant au moins une grille déflectrice disposée en sortie de la volute, ladite grille déflectrice prolongeant un bord externe de la sortie et s'étendant sur un plan incliné orienté vers la paroi de guidage, ladite grille déflectrice comportant une série de pales superposées et s'étendant chacune selon un axe transversal perpendiculaire à la direction longitudinale du module de refroidissement, lesdites pales étant mobiles en rotation autour de leur axe transversale entre une position d'obturation et une position ouverte.

Selon un aspect de l'invention, en position d'obturation les pales (51) sont en contact les unes des autres de sorte à former une surface d'arrêt du flux d'air (F).

Selon un autre aspect de l'invention, la pale la plus à l'opposé du bord externe est, en position d'obturation, à la fois au contact de la pale adjacente par un premier de ses bords et au contact de la paroi séparatrice par un deuxième de ses bords, opposé au premier.

Selon un autre aspect de l'invention, la grille déflectrice comporte au moins deux compartiments juxtaposés, chaque compartiment comportant une série de pales superposées, les compartiments étant séparés par une paroi séparatrice reliant les pales superposées de chaque compartiment entre elles.

Selon un autre aspect de l'invention, les pales de chaque compartiment sont mobiles en rotation indépendamment d'un compartiment à un autre.

Selon un autre aspect de l'invention, les parois séparatrices sont mobiles autour d'un axe de rotation perpendiculaire à l'axe transversal des pales.

Selon un autre aspect de l'invention, l'ensemble de la largeur de la sortie du module de refroidissement est recouvert par au moins une grille déflectrice.

Selon un autre aspect de l'invention, les pales de l'au moins une grille déflectrice ont une section de forme courbe avec une première paroi concave faisant face à la sortie et une deuxième paroi convexe à l'opposé de la sortie.

Selon un autre aspect de l'invention, les pales comportent un bord d'attaque par lequel le flux d'air est destiné à arriver contre ladite pale, un bord de fuite par lequel le flux d'air est destiné à être éjecté par ladite pale, l'épaisseur de la section de la pale au niveau desdits bords d'attaque et de fuite étant inférieure à l'épaisseur centrale de la section de la pale.

Selon un autre aspect de l'invention, en position ouverte, l'angle entre la tangente au bord d'attaque des pales de l'au moins une grille déflectrice et le vecteur de vitesse du flux d'air est égal à l'angle entre la tangente au bord de fuite des pales de la turbine et le vecteur de vitesse du flux d'air en sorte de ladite turbine.

D'autres avantages et caractéristiques de l'invention apparaîtront plus clairement à la lecture de la description suivante donnée à titre d'exemple illustratif et non limitatif, et des dessins annexés parmi lesquels :
[Fig 1] La figure 1 représente schématiquement la partie avant d'un véhicule automobile à moteur électrique ou hybride, vu de côté,
[Fig 2] La figure 2 représente une vue en perspective et en coupe partielle d'un module de refroidissement,
[Fig 3] La figure 3 représente une vue en coupe d'un premier boîtier collecteur du module de refroidissement de la Figure 2,
[Fig 4] La figure 4 représente une vue en perspective et en coupe d'une grille déflectrice,
[Fig 5] La figure 5 représente une vue en coupe d'une grille déflectrice fermée.
[Fig 6] La figure 6 représente une vue en perspective de la face arrière d'un premier boîtier collecteur selon un premier mode de réalisation,
[Fig 7] La figure 7 représente une vue en perspective de la face arrière d'un premier boîtier collecteur selon un deuxième mode de réalisation,
[Fig 8] La figure 8 représente une vue en coupe des pales d'une grille déflectrice,
[Fig 9] La figure 9 représente une vue en coupe des pales d'une turbine

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « amont » qu'un élément est placé avant un autre par rapport au sens de circulation d'un flux d'air. A contrario, on entend par « aval » qu'un élément est placé après un autre par rapport au sens de circulation d'un flux ou d'un fluide.

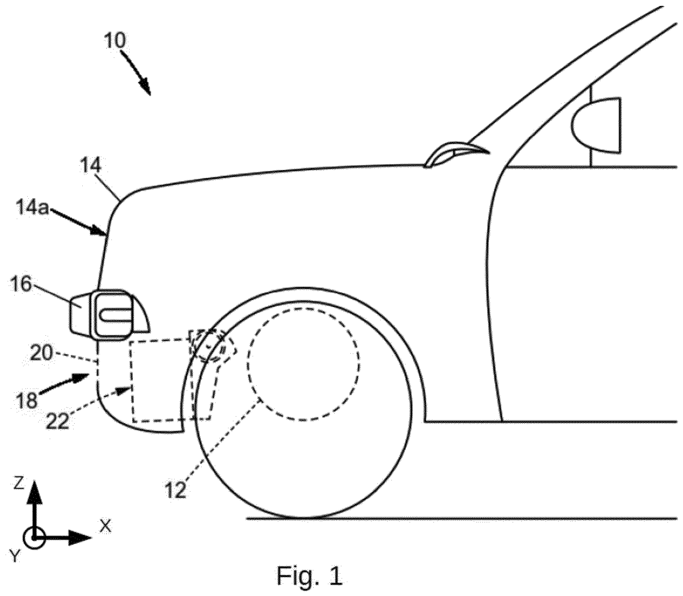

Sur les figures 1 à 6, est représenté un trièdre XYZ afin de définir l'orientation des différents éléments les uns des autres. Une première direction, notée X, correspond à une direction longitudinale du véhicule. Elle correspond également à l'inverse de la direction d'avancement du véhicule. Une deuxième direction, notée Y, est une direction latérale ou transversale. Enfin, une troisième direction, notée Z, est verticale. Les directions, X, Y, Z sont orthogonales deux à deux.

Sur la figure 1, le module de refroidissement selon la présente invention est illustré dans une position fonctionnelle, c'est-à-dire quand il est disposé au sein d'un véhicule automobile.

La figure 1 illustre de manière schématique la partie avant d'un véhicule automobile 10 électrique ou hybride pouvant comporter un moteur électrique 12. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 est ici unique. Cette baie de refroidissement 18 se trouve de préférence en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

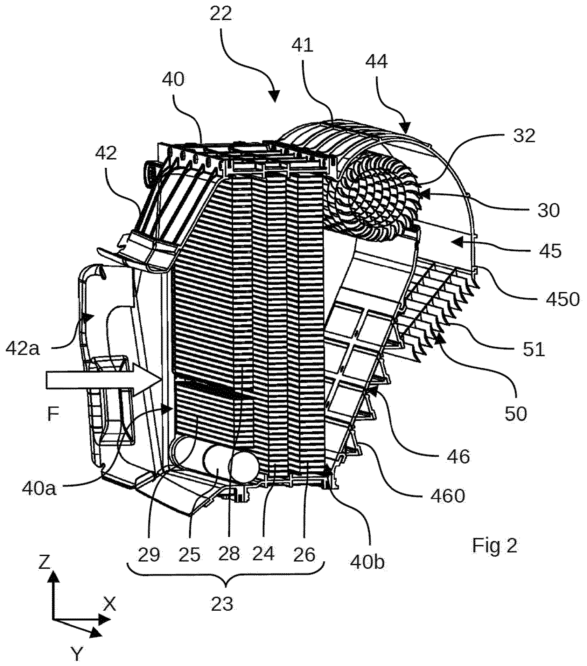

Comme le montre la figure 2, le module de refroidissement 22 est destiné à être traversé par un flux d'air F parallèle à la direction X et allant de l'avant vers l'arrière du véhicule 10. Cette direction X correspond plus particulièrement à une direction longitudinale X allant de l'avant vers l'arrière du module de refroidissement 22. Dans la présente demande, on qualifie un élément d'en « amont » ou d'en « aval » selon la direction longitudinale X du module de refroidissement 22, un élément qui est respectivement disposé plus vers l'avant ou vers l'arrière qu'un autre élément. L'avant correspond à l'avant du véhicule automobile 10 à l'état monté ou alors la face du module de refroidissement 22 par laquelle le flux d'air F est destiné à entrer dans le module de refroidissement 22. L'arrière correspond quant à lui à l'arrière du véhicule automobile 10 ou alors à la face du module de refroidissement 22 par laquelle le flux d'air F est destiné à ressortir du module de refroidissement 22.

Le module de refroidissement 22 comporte essentiellement un boîtier ou carénage 40 formant un canal interne entre une extrémité amont 40a et une extrémité aval 40b opposées l'une à l'autre. A l'intérieur dudit carénage 40 est disposé au moins un échangeur de chaleur 24, 26, 28, 29. Ce canal interne est de préférence orienté parallèlement à la direction longitudinale X de sorte que l'extrémité amont 40a est orientée vers l'avant du véhicule 10 en regard de la baie de refroidissement 18 et de sorte que l'extrémité aval 40b est orientée vers l'arrière du véhicule 10. Sur la figure 2, le module de refroidissement 22 comprend quatre échangeurs de chaleur 24, 26, 28 et 29 regroupés au sein d'un ensemble d'échangeurs de chaleur 23. Il pourrait toutefois en comporter plus ou moins suivant la configuration souhaitée.

Un premier échangeur de chaleur 24 peut par exemple être configuré pour relâcher de l'énergie calorifique du flux d'air F. Ce premier échangeur de chaleur 24 peut plus particulièrement être un condenseur connecté à un circuit de refroidissement (non représenté), par exemple afin de refroidir les batteries du véhicule 10. Ce circuit de refroidissement peut par exemple être un circuit de climatisation apte à refroidir les batteries ainsi qu'un flux d'air interne à destination de l'habitacle du véhicule automobile.

Un deuxième échangeur de chaleur 26 peut également être configuré pour relâcher de l'énergie calorifique dans le flux d'air F. Ce deuxième échangeur de chaleur 26 peut plus particulièrement être un radiateur connecté à un circuit de gestion thermique (non représenté) d'éléments électriques tel que le moteur électrique 12.

Le premier échangeur de chaleur 24 étant généralement un condenseur d'un circuit de climatisation, ce dernier a besoin que le flux d'air F soit le plus « frais » possible en mode climatisation. Pour cela, le deuxième échangeur de chaleur 26 est de préférence disposé en aval du premier échangeur de chaleur 24 selon la direction longitudinale X du module de refroidissement 22. Il est néanmoins tout à fait possible d'imaginer que le deuxième échangeur de chaleur 26 soit disposé en amont du premier échangeur de chaleur 24.

Le troisième échangeur de chaleur 28 peut lui aussi être configuré pour relâcher de l'énergie calorifique dans le flux d'air. Ce troisième échangeur de chaleur 28 peut plus particulièrement être un radiateur connecté à un circuit de gestion thermique (non représenté), pouvant être distinct de celui connecté au deuxième échangeur de chaleur 26, pour des éléments électriques tels que l'électronique de puissance. Il est également tout à fait possible d'imaginer que le deuxième 26 et le troisième 28 échangeur de chaleur soient connectés à un même circuit de gestion thermique, par exemple connectés en parallèle l'un de l'autre.

Le quatrième échangeur 29 est disposé ici sur le même plan que le troisième échangeur 28, plus précisément en dessous de ce dernier. Ce quatrième échangeur de chaleur 29 peut notamment être connecté au même circuit de refroidissement que le premier échangeur de chaleur 24 et avoir une fonction de sous-refroidissement.

Dans l'exemple illustré à la figure 2, l'ensemble d'échangeur de chaleur 23 comporte également une bouteille déshydratante 25 disposée sur le même plan que le troisième 28 et quatrième 29 échangeur de chaleur. Cette bouteille déshydratante 25 peut notamment être connectée elle aussi au même circuit de refroidissement que le premier échangeur de chaleur 24.

Toujours selon l'exemple illustré à la figure 2, le deuxième échangeur de chaleur 26 est disposé en aval du premier échangeur de chaleur 24 tandis que le troisième échangeur de chaleur 28 est disposé en amont du premier échangeur de chaleur 24. D'autres configurations peuvent néanmoins être envisageables comme par exemple les deuxième 26 et troisième 28 échangeurs de chaleur disposés tous deux en aval ou en amont du premier échangeur de chaleur 24.

Sur le mode de réalisation illustré, chacun des échangeurs de chaleur 24, 26, 28, 29 présente une forme générale parallélépipédique déterminée par une longueur, une épaisseur et une hauteur. La longueur s'étend le long de la direction Y, l'épaisseur le long de la direction X et la hauteur dans la direction Z. Les échangeurs de chaleur 24, 26, 28, 29 s'étendent alors selon un plan général parallèle à la direction verticale Z et la direction latérale Y. Ce plan général est de préférence perpendiculaire à la direction longitudinale X du module de refroidissement 22.

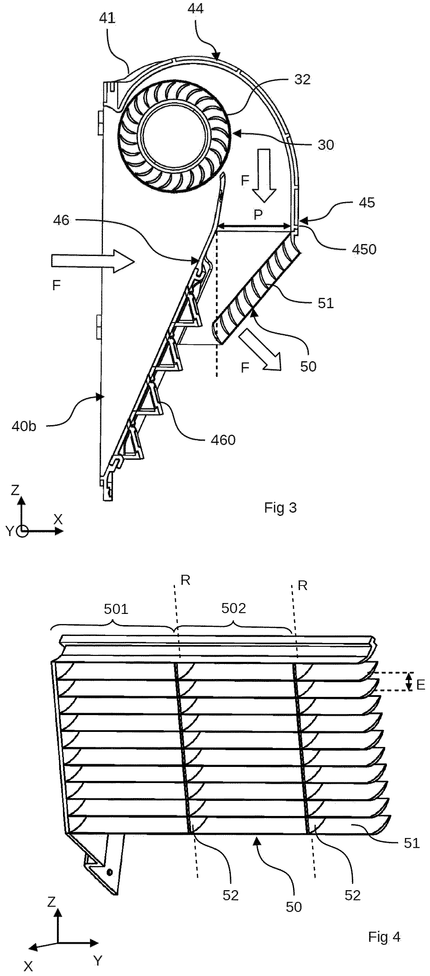

Le module de refroidissement 22 comporte également un premier boîtier collecteur 41 disposé en aval de l'ensemble d'échangeurs de chaleur 23 dans le sens de circulation du flux d'air. Ce premier boîtier collecteur 41 est également visible plus en détail à la figure 3. Le premier boîtier collecteur 41 comporte une sortie 45 du flux d'air F, Ce premier boîtier collecteur 41 permet ainsi de récupérer le flux d'air F traversant l'ensemble d'échangeurs de chaleur 23 et d'orienter ce flux d'air F vers la sortie 45. Le premier boîtier collecteur 41 peut venir de matière avec le carénage 40 ou bien être une pièce rapportée fixée à l'extrémité aval 40b dudit carénage 40.

Comme illustré sur la figure 2, le module de refroidissement 22 peut également comporter un deuxième boîtier collecteur 42 disposé en amont du carénage 40 et de l'ensemble d'échangeurs de chaleur 23, à l'opposé du premier boîtier collecteur 41. Ce deuxième boîtier collecteur 42 comporte une entrée 42a du flux d'air F en provenance de l'extérieur du véhicule 10. L'entrée 42a peut notamment être disposée en regard de la baie de refroidissement 18. Cette entrée 42a peut également comporter la grille 20 de protection (voir figure 1). Le deuxième boîtier collecteur 42 peut venir de matière avec le carénage 40 ou bien être une pièce rapportée fixée à l'extrémité amont 40a dudit carénage 40.

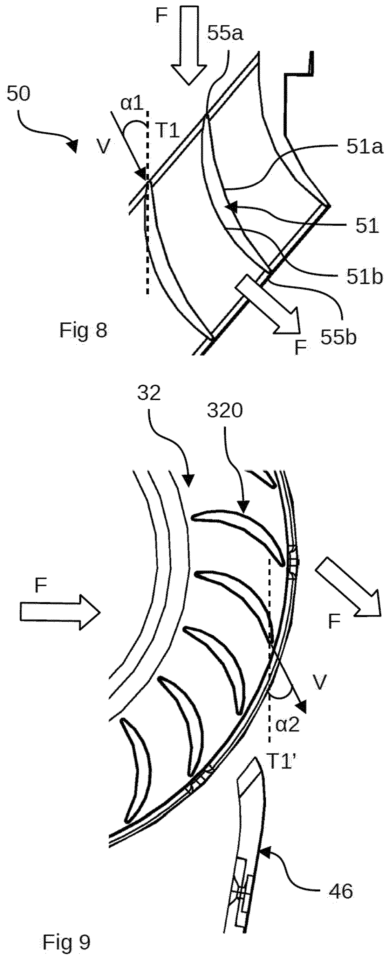

Le module de refroidissement 22, plus précisément le premier boîtier collecteur 41, comprend également au moins un ventilateur tangentiel, aussi nommé turbomachine tangentielle 30, configuré de sorte à générer le flux d'air F traversant l'ensemble d'échangeurs de chaleur 23. La turbomachine tangentielle 30 comprend un rotor ou turbine 32 (ou hélice tangentielle). La turbine 32 a une forme sensiblement cylindrique. La turbine 32 comporte avantageusement plusieurs étages de pales 320 (visibles sur la figure 9). La turbine 32 est montée rotative autour d'un axe de rotation, par exemple parallèle à la direction Y comme illustré sur les figures 2 et 3. Le diamètre de la turbine 32 est par exemple compris entre 35 mm et 200 mm pour limiter sa taille. La turbomachine 30 est ainsi compacte.

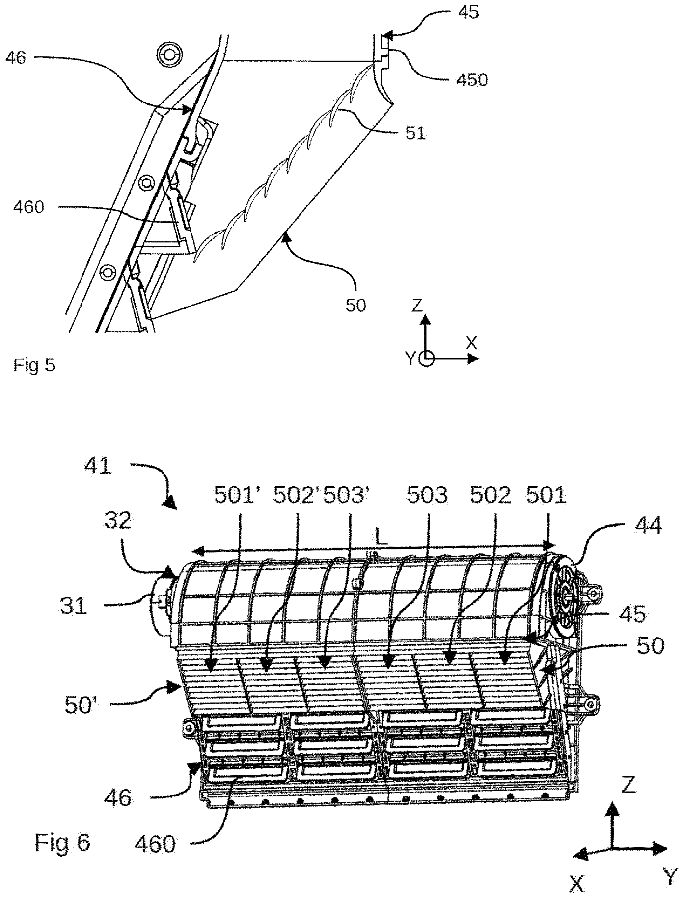

La turbomachine tangentielle 30 peut également comporter un moteur 31 (visible sur les figures 5 et 6) configuré pour mettre en rotation la turbine 32. Le moteur 31 est par exemple adapté à entraîner la turbine 32 en rotation, à une vitesse comprise entre 200 tour/min et 14 000 tour/min. Ceci permet notamment de limiter le bruit généré par la turbomachine tangentielle 30.

La turbomachine tangentielle 30 est disposée dans le premier boîtier collecteur 41. La turbomachine tangentielle 30 est configurée pour aspirer de l'air afin de générer le flux d'air F traversant l'ensemble d'échangeurs de chaleur 23. La turbomachine tangentielle 30 comporte plus précisément une volute 44, formée par le premier boîtier collecteur 41 et au centre de laquelle est disposée la turbine 32. L'évacuation d'air de la volute 44 correspond à la sortie 45 du flux d'air F du premier boîtier collecteur 41.

Dans l'exemple illustré aux figures 2 et 3, la turbomachine tangentielle 30 est dans une position haute, notamment dans le tiers supérieur du premier boîtier collecteur 41, de manière préférée dans le quart supérieur du premier boîtier collecteur 41. Ceci permet notamment de protéger la turbomachine tangentielle 30 en cas de submersion et/ou de limiter l'encombrement du module de refroidissement 22 dans sa partie inférieure. Dans ce cas de figure, la sortie 45 du flux d'air F est préférentiellement orientée vers la partie inférieure du module de refroidissement 22.

Par supérieur et inférieur, on entend ici une orientation selon la direction Z. Un élément dit supérieur sera plus proche du toit du véhicule 10 et un élément dit inférieur sera plus proche du sol.

Afin de guider l'air en sortie de l'ensemble d'échangeurs de chaleur 23 vers la sortie 45, le premier boîtier collecteur 41 comporte, disposée en regard de l'extrémité aval 40b du carénage 40, une paroi de guidage 46 du flux d'air F vers la sortie 45.

Le module de refroidissement 22 et plus précisément le premier boîtier 41 comporte également au moins une grille déflectrice 50 disposée en sortie 45 de la volute 44. Cette grille déflectrice 50 prolonge un bord externe 450 de la sortie 45 et s'étend sur un plan incliné orienté vers la paroi de guidage 46. Le bord externe 450 de la sortie 45 correspond plus précisément au bord de la paroi externe de la volute 44. La grille déflectrice 50 comporte une série de pales 51 superposées et s'étendant chacune selon un axe transversal Y perpendiculaire à la direction longitudinale X du module de refroidissement 22.

L'au moins une grille déflectrice 50 peut plus particulièrement être une pièce rapportée fixée d'une part au bord externe 450 de la sortie 45 et d'autre part prenant appuis sur la paroi séparatrice 46 au moyen de parois d'appuis. La grille déflectrice 50 peut être réalisée en matériau plastique. Comme illustré à la figure 3, l'au moins une grille déflectrice 50 peut notamment s'étendre à l'aplomb de la sortie 45 sur une distance au moins égale à la profondeur P de la ladite sortie 45. Ainsi, l'ensemble du flux d'air F en provenance de la sortie 45 passe par l'au moins une grille déflectrice 50. De plus du fait de l'inclinaison de la paroi de guidage 46 et de celle de l'au moins une grille déflectrice 50 il reste un espace pour permettre aux volets 460 de la paroi de guidage 46 de s'ouvrir.

Comme le montre la figure 4, une grille déflectrice 50 peut comporter au moins deux compartiments 501, 502, juxtaposés. Chaque compartiment 501, 502, comporte une série de pales 51 superposées et ces compartiments 501, 502, sont séparés par une paroi séparatrice 52. Cette paroi séparatrice 52 relie les pales 51 superposées de chaque compartiment 501, 502 entre elles. Les parois séparatrices 52 s'étendent plus particulièrement selon un plan perpendiculaire aux pales 51 et permettent aux pales 51 de rester rectiligne et de ne pas ployer sous leur propre poids. Afin de permettre une bonne circulation du flux d'air F, l'écart E entre les axes transversaux Y de deux pales 51 adjacentes peut notamment être compris entre 5 et 20mm. De préférence, cette écart E peut être de 12mm.

Les pales 51 sont mobiles en rotation autour de leur axe transversal Y entre une position ouverte (illustrée aux figures 2 à 4) et une position d'obturation (illustrée à la figure 5).

En position ouverte, le flux d'air F peut traverser l'au moins une grille déflectrice 50. Les pales 51 sont notamment configurées pour dévier le flux d'air F et l'éloigner de la paroi de guidage 46. En position ouverte, la paroi déflectrice 50 permet ainsi de dévier et orienter le flux d'air F en provenance de la sortie 45 et de le diriger vers une zone qui par exemple ne présente pas d'obstacle pouvant perturber la circulation et l'évacuation du flux d'air F. Les pales peuvent notamment avoir un angle d'ouverture variable permettant de guider le flux d'air F selon les besoins, notamment afin de contourner d'éventuels obstacles au sein du véhicule automobile 10 et ainsi permettre une bonne évacuation du flux d'air F.

En position d'obturation, les pales 51 sont inclinées de telle sorte que le flux d'air F ne peut pas traverser la grille déflectrice 50. Plus précisément et comme illustré à la figure 5, en position d'obturation les pales 51 sont en contact les unes des autres de sorte à former une surface d'arrêt du flux d'air F. Afin d'assurer l'étanchéité en position d'obturation, les pales 51 peuvent comporter au niveau de leur zone de contact entre-elles des joints d'étanchéité (non représentés).

Toujours en position d'obturation, la pale 51 la plus à l'opposé du bord externe 450 peut notamment être à la fois au contact de la pale 51 adjacente par un premier de ses bords et au contact de la paroi séparatrice 46 par un deuxième de ses bords, opposé au premier. Cela permet notamment de bloquer complètement le flux d'air F et ainsi boucher l'espace permettant aux volets 460 de la paroi de guidage 46 de s'ouvrir.

Afin de mettre en mouvement les pales 51, la grille déflectrice 50 peut notamment comporter un actionneur et un dispositif de transmission de la rotation (non représentés) de l'actionneur aux pales 51. Ce dispositif de transmission peut par exemple comporter un levier et une bielle afin de faire pivoter simultanément les pales 51. L' actionneur peut être par exemple un moteur électrique ou bien un mécanisme manuel afin d'orienter les pales 51 lors du montage du module de refroidissement 22.

La présente de cette grille déflectrice 50 et notamment du fait qu'elle ait une position d'obturation, permet un blocage du flux d'air F. Ainsi, il n'est pas nécessaire que le véhicule 10 ou plus précisément le deuxième boîtier collecteur 42 du module de refroidissement 22 comporte un dispositif d'obturation de face avant. Le flux d'air F sera alors non pas bloqué en amont du module de refroidissement 22 mais en aval de ce dernier. Le module de refroidissement 22 est donc ainsi plus compact car ne nécessite pas de dispositif d'obturation de face avant et peut également être plus léger.

Les pales 51 de chaque compartiment 501, 502 peuvent notamment être mobiles en rotation indépendamment d'un compartiment 501, 502 à un autre. Chaque compartiment 501, 502 comporte alors un actionneur et un dispositif de transmission dédié. Cela permet ainsi d'orienter précisément le flux d'air F afin d'éviter d'éventuels obstacles au sein du véhicule automobile 10.

Les parois séparatrices 52 peuvent également être mobiles afin d'orienter précisément le flux d'air F. Les parois séparatrices 52 peuvent plus particulièrement êtres mobiles autour d'un axe de rotation R perpendiculaire à l'axe transversal Y des pales 51. L'orientation du flux d'air F se fera alors latéralement grâce à ces parois séparatrices 52 tandis que l'orientation du flux d'air F se fera verticalement grâce aux pales 52.

Comme le montre la figure 6, l'au moins une paroi déflectrice 50, 50' peut recouvrir l'ensemble de la largeur L de la sortie 45 du module de refroidissement 22. Dans l'exemple illustré à la figure 6, le premier boîtier collecteur 41 comporte deux grilles déflectrices 50 et 50' disposées au niveau de la sortie 45 de la volute 44. Ces deux grilles déflectrices 50, 50' sont disposées l'une à côté de l'autre de sorte à recouvrir l'ensemble de la largeur L de la sortie 45.

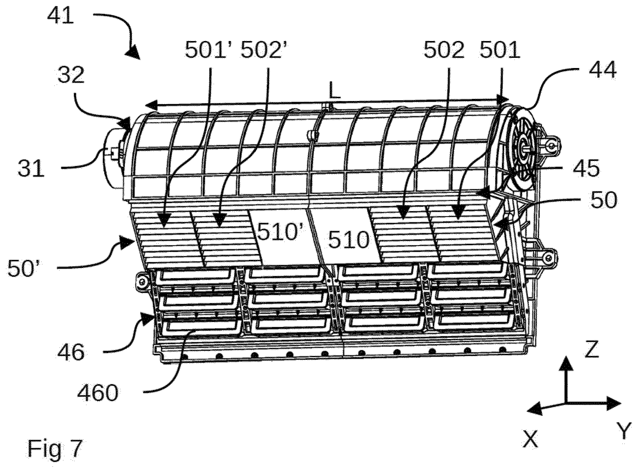

Selon une variante illustrée à la figure 7, la sortie 45 du module de refroidissement 22 peut comporter au moins une zone dépourvue d'au moins une grille déflectrice 50, 50'. Dans l'exemple illustré à la figure 7, le premier boîtier collecteur 41 comporte deux grilles déflectrices 50 et 50' disposées au niveau de la sortie 45 de la volute 44. Ces deux grilles déflectrices 50, 50' sont disposées l'une à côté de l'autre mais elles comportent chacune une zone dépourvue de pales 51. La zone dépourvue d'au moins une grille déflectrice 50 de la sortie 45 peut notamment comporter une paroi de blocage 510, 510' s'étendant selon le même plan que l'au moins une grille déflectrice 50, 50'. Cette zone dépourvue de grille déflectrice 50, 50' permet une gestion compartimentée du flux d'air F avec une déviation de ce dernier au niveau de l'au moins une grille déflectrice 50, 50' et une évacuation libre au niveau de la zone dépourvue de grille déflectrice 50, 50' ou un blocage du flux d'air si cette zone comporte une paroi de blocage 510, 510'.

Comme le montre la figure 8, les pales 51 de l'au moins une grille déflectrice 50 peuvent notamment avoir une section de forme courbe avec une première paroi concave 51a faisant face à la sortie 45 et une deuxième paroi convexe 51b à l'opposé de la sortie 45. Plus précisément, les pales 51 peuvent comporter un bord d'attaque 55a par lequel le flux d'air F est destiné à arriver contre ladite pale 51 et un bord de fuite 55b par lequel le flux d'air F est destiné à être éjecté de ladite pale 51. L'épaisseur de la section de la pale 51 au niveau desdits bords d'attaque 55a et de fuite 55b peut être inférieure à l'épaisseur centrale de la section de la pale 51. Cette forme en goutte de la section de la pale 51 permet un bon écoulement du flux d'air F et une bonne déviation de ce dernier tout en limitant les pertes de charges.

Comme le montre les figures 8 et 9, il existe une relation particulière entre la forme des pales 320 de la turbine 32 et les pales 51 de la grille déflectrice 50. Plus particulièrement, l'angle α1 entre la tangente T1 au bord d'attaque 55a des pales 51 de l'au moins une grille déflectrice 50 et le vecteur de vitesse V du flux d'air F est égal à l'angle α2 entre la tangente T1'au bord de fuite des pales 51 de la turbine 32 et le vecteur de vitesse V du flux d'air F en sortie de ladite turbine 32. Le vecteur de vitesse V correspond ici au vecteur de vitesse du flux d'air F lorsqu'il traverse respectivement l'au moins une grille déflectrice 50 et la turbine 32. Cette relation permet notamment au flux d'air F une meilleure circulation notamment en limitant les pertes de charges.

Ainsi, on voit bien qu'avec l'ajout d'au moins une grille déflectrice 50, il est possible d'orienter le flux d'air F au niveau de la sortie 45 selon les besoins pour une meilleure circulation dudit flux d'air F. Cela permet de s'affranchir des obstacles éventuels présents dans le compartiment destiné à accueillir le module de refroidissement 22. De plus, le fait que les pales 51 de l'au moins une grille déflectrice 50 soient mobiles dans une position d'obturation, permet de s'affranchir d'un dispositif d'obturation de face avant pour bloquer le flux d'air F. Le module de refroidissement 22 peut ainsi conserver un encombrement et un poids restreint pour s'adapter au sein du véhicule automobile.

## Revendications

1. Module de refroidissement (22) pour véhicule automobile (10) électrique ou hybride, ledit module de refroidissement (22) étant destiné à être traversé par un flux d'air (F) et comportant :
- un carénage (40) formant un canal interne traversé par le flux d'air (F) entre une extrémité amont (40a) et une extrémité aval (40b) opposées l'une à l'autre, ledit carénage (40) comportant au moins un échangeur de chaleur (24, 26, 28, 29),
- un premier boîtier colleteur (41) disposé en aval du carénage (40) selon une direction longitudinale (X) du module de refroidissement (22) allant de l'avant vers l'arrière dudit module de refroidissement (22), ledit premier boîtier collecteur (41) comportant une paroi de guidage (46) faisant face à l'échangeur de chaleur aval du carénage, ladite paroi de guidage (46) étant destinée à guider le flux d'air (F) vers une turbomachine tangentielle (30) configurée de sorte à générer ledit flux d'air (F), ladite turbomachine tangentielle (30) comportant une volute (44) comprenant une sortie (45) du flux d'air (F),
**caractérisé en ce qu'**il comporte au moins une grille déflectrice (50) disposée en sortie (45) de la volute (44), ladite grille déflectrice (50) prolongeant un bord externe (450) de la sortie (45) et s'étendant sur un plan incliné orienté vers la paroi de guidage (46), ladite grille déflectrice (50) comportant une série de pales (51) superposées et s'étendant chacune selon un axe transversal (Y) perpendiculaire à la direction longitudinale (X) du module de refroidissement (22), lesdites pales (51) étant mobiles en rotation autour de leur axe transversale (Y) entre une position d'obturation et une position ouverte.

2. Module de refroidissement (22) selon la revendication 1, **caractérisé en ce qu'**en position d'obturation les pales (51) sont en contact les unes des autres de sorte à former une surface d'arrêt du flux d'air (F).

3. Module de refroidissement (22) selon l'une quelconque des revendications précédentes, **caractérisé en ce que** la pale (51) la plus à l'opposé du bord externe (450) est, en position d'obturation, à la fois au contact de la pale (51) adjacente par un premier de ses bords et au contact de la paroi séparatrice (46) par un deuxième de ses bords, opposé au premier.

4. Module de refroidissement (22) selon l'une quelconque des revendications précédentes, **caractérisé en ce que** la grille déflectrice (50) comporte au moins deux compartiments (501, 502) juxtaposés, chaque compartiment (501, 502) comportant une série de pales (51) superposées, les compartiments (501, 502) étant séparés par une paroi séparatrice (52) reliant les pales (51) superposées de chaque compartiment (501, 502) entre elles.

5. Module de refroidissement (22) selon la revendication précédente, **caractérisé en ce que** les pales (51) de chaque compartiment (501, 502) sont mobiles en rotation indépendamment d'un compartiment (501, 502) à un autre.

6. Module de refroidissement (22) selon la revendication précédente, **caractérisé en ce que** les parois séparatrices (52) sont mobiles autour d'un axe de rotation (R) perpendiculaire à l'axe transversal (Y) des pales (51).

7. Module de refroidissement (22) selon l'une quelconque des revendications 1 à 6, **caractérisé en ce que** l'ensemble de la largeur (L) de la sortie (45) du module de refroidissement (22) est recouvert par au moins une grille déflectrice (50).

8. Module de refroidissement (22) selon l'une quelconque des revendications précédentes, **caractérisé en ce que** les pales (51) de l'au moins une grille déflectrice (50) ont une section de forme courbe avec une première paroi concave (51a) faisant face à la sortie (45) et une deuxième paroi convexe (51b) à l'opposé de la sortie (45).

9. Module de refroidissement (22) selon la revendication précédente, **caractérisé en ce que** les pales (51) comportent un bord d'attaque (55a) par lequel le flux d'air (F) est destiné à arriver contre ladite pale (51), un bord de fuite (55b) par lequel le flux d'air (F) est destiné à être éjecté par ladite pale (51), l'épaisseur de la section de la pale (51) au niveau desdits bords d'attaque (55a) et de fuite (55b) étant inférieure à l'épaisseur centrale de la section de la pale (51).

10. Module de refroidissement (22) selon la revendication précédente, **caractérisé en ce qu'**en position ouverte, l'angle (α1) entre la tangente (T1) au bord d'attaque (55a) des pales (51) de l'au moins une grille déflectrice (50) et le vecteur de vitesse (V) du flux d'air (F) est égal à l'angle (α2) entre la tangente (T1') au bord de fuite des pales de la turbine (32) et le vecteur de vitesse (V) du flux d'air (F) en sorte de ladite turbine (32).

## Patentansprüche

1. Kühlmodul (22) für ein Elektro- oder Hybridkraftfahrzeug (10), wobei das Kühlmodul (22) dazu bestimmt ist, von einem Luftstrom (F) durchquert zu werden, und Folgendes aufweist:
- eine Verkleidung (40), die einen inneren Kanal bildet, der von dem Luftstrom (F) zwischen einem stromaufwärtigen Ende (40a) und einem stromabwärtigen Ende (40b), die einander gegenüberliegen, durchquert wird, wobei die Verkleidung (40) mindestens einen Wärmetauscher (24, 26, 28, 29) aufweist,
- ein erstes Sammelgehäuse (41), das stromabwärts der Verkleidung (40) gemäß einer Längsrichtung (X) des Kühlmoduls (22) angeordnet ist, die von der Vorderseite zur Rückseite des Kühlmoduls (22) verläuft, wobei das erste Sammelgehäuse (41) eine Führungswand (46) aufweist, die dem stromabwärts der Verkleidung angeordneten Wärmetauscher gegenüberliegt, wobei die Führungswand (46) dazu bestimmt ist, den Luftstrom (F) zu einer tangentialen Turbomaschine (30) zu führen, die so konfiguriert ist, dass sie den Luftstrom (F) erzeugt, wobei die tangentiale Turbomaschine (30) eine Spirale (44) mit einem Auslass (45) für den Luftstrom (F) aufweist,
**dadurch gekennzeichnet, dass** es mindestens ein Ablenkgitter (50) aufweist, das am Auslass (45) der Spirale (44) angeordnet ist, wobei das Ablenkgitter (50) einen Außenrand (450) des Auslasses (45) verlängert und sich auf einer geneigten Ebene erstreckt, die zur Führungswand (46) hin gerichtet ist, wobei das Ablenkgitter (50) eine Reihe von Schaufeln (51) aufweist, die übereinander angeordnet sind und sich jeweils entlang einer Querachse (Y) senkrecht zur Längsrichtung (X) des Kühlmoduls (22) erstrecken, wobei die Schaufeln (51) um ihre Querachse (Y) zwischen einer Verschlussstellung und einer offenen Stellung drehbar sind.

2. Kühlmodul (22) nach Anspruch 1, **dadurch gekennzeichnet, dass** in der Verschlussstellung die Schaufeln (51) einander berühren, so dass eine Sperrfläche für den Luftstrom (F) gebildet wird.

3. Kühlmodul (22) nach einem der vorhergehenden Ansprüche, **dadurch gekennzeichnet, dass** die der Außenkante (450) am weitesten gegenüberliegende Schaufel (51) in der Verschlussstellung sowohl mit einer ersten ihrer Kanten die benachbarte Schaufel (51) berührt als auch mit einer zweiten ihrer Kanten, die der ersten Kante gegenüberliegt, die Trennwand (46) berührt.

4. Kühlmodul (22) nach einem der vorhergehenden Ansprüche, **dadurch gekennzeichnet, dass** das Ablenkgitter (50) mindestens zwei nebeneinander liegende Fächer (501, 502) aufweist, wobei jedes Fach (501, 502) eine Reihe von übereinander liegenden Schaufeln (51) aufweist, wobei die Fächer (501, 502) durch eine Trennwand (52) getrennt sind, die die übereinander liegenden Schaufeln (51) jedes Fachs (501, 502) miteinander verbindet.

5. Kühlmodul (22) nach dem vorhergehenden Anspruch, **dadurch gekennzeichnet, dass** die Schaufeln (51) jedes Fachs (501, 502) unabhängig voneinander von einem Fach (501, 502) zum anderen drehbar sind.

6. Kühlmodul (22) nach dem vorhergehenden Anspruch, **dadurch gekennzeichnet, dass** die Trennwände (52) um eine Drehachse (R) senkrecht zur Querachse (Y) der Schaufeln (51) beweglich sind.

7. Kühlmodul (22) nach einem der Ansprüche 1 bis 6, **dadurch gekennzeichnet, dass** die gesamte Breite (L) des Auslasses (45) des Kühlmoduls (22) von mindestens einem Ablenkgitter (50) bedeckt ist.

8. Kühlmodul (22) nach einem der vorhergehenden Ansprüche, **dadurch gekennzeichnet, dass** die Schaufeln (51) des mindestens einen Ablenkgitters (50) einen kurvenförmigen Querschnitt mit einer ersten konkaven Wand (51a), die dem Auslass (45) zugewandt ist, und einer zweiten konvexen Wand (51b) auf der gegenüberliegenden Seite des Auslasses (45) haben.

9. Kühlmodul (22) nach dem vorhergehenden Anspruch, **dadurch gekennzeichnet, dass** die Schaufeln (51) eine Vorderkante (55a) aufweisen, die dazu dient, den Luftstrom (F) gegen die Schaufel (51) treffen zu lassen, und eine Hinterkante (55b), die dazu dient, den Luftstrom (F) von der Schaufel (51) ausstoßen zu lassen, wobei die Dicke des Querschnitts der Schaufel (51) an der Vorderkante (55a) und der Hinterkante (55b) geringer ist als die zentrale Dicke des Querschnitts der Schaufel (51).

10. Kühlmodul (22) nach dem vorhergehenden Anspruch, **dadurch gekennzeichnet, dass** in der offenen Stellung der Winkel (α1) zwischen der Tangente (T1) an der Vorderkante (55a) der Schaufeln (51) des mindestens einen Ablenkgitters (50) und dem Geschwindigkeitsvektor (V) des Luftstroms (F) gleich dem Winkel (α2) zwischen der Tangente (T1') an der Hinterkante der Schaufeln der Turbine (32) und dem Geschwindigkeitsvektor (V) des Luftstroms (F) aus der Turbine (32) ist.

## Claims

1. Cooling module (22) for an electric or hybrid motor vehicle (10), said cooling module (22) being intended to have an airflow (F) passing through it and comprising:
- a fairing (40) forming an internal channel through which the airflow (F) passes between an upstream end (40a) and a downstream end (40b) opposite each other, said fairing (40) comprising at least one heat exchanger (24, 26, 28, 29),
- a first collector housing (41) arranged downstream of the fairing (40) in a longitudinal direction (X) of the cooling module (22) from the front to the rear of said cooling module (22), said first collector housing (41) comprising a guide wall (46) facing the heat exchanger downstream of the fairing, said guide wall (46) being intended to guide the airflow (F) towards a tangential turbomachine (30) configured so as to generate said airflow (F), said tangential turbomachine (30) comprising a volute (44) comprising an outlet (45) for the airflow (F),
**characterized in that** it comprises at least one deflector grille (50) arranged at the outlet (45) of the volute (44), said deflector grille (50) extending an outer edge (450) of the outlet (45) and extending on an inclined plane oriented towards the guide wall (46), said deflector grille (50) comprising a series of superimposed blades (51) each extending along a transverse axis (Y) perpendicular to the longitudinal direction (X) of the cooling module (22), said blades (51) being rotatable about their transverse axis (Y) between a closed position and an open position.

2. Cooling module (22) according to Claim 1, **characterized in that**, in the closed position, the blades (51) are in contact with each other to form a stop surface for the airflow (F).

3. Cooling module (22) according to either one of the preceding claims, **characterized in that** the blade (51) furthest away from the outer edge (450) is, in the closed position, both in contact with the adjacent blade (51) by a first of its edges and in contact with the separating wall (46) by a second of its edges, opposite the first.

4. Cooling module (22) according to any one of the preceding claims, **characterized in that** the deflector grille (50) comprises at least two compartments (501, 502), arranged side by side, each compartment (501, 502) comprising a series of superimposed blades (51), the compartments (501, 502) being separated by a separating wall (52) connecting the superimposed blades (51) of each compartment (501, 502) to each other.

5. Cooling module (22) according to the preceding claim, **characterized in that** the blades (51) of each compartment (501, 502) are independently rotatable from one compartment (501, 502) to another.

6. Cooling module (22) according to the preceding claim, **characterized in that** the separating walls (52) are movable about an axis of rotation (R) perpendicular to the transverse axis (Y) of the blades (51).

7. Cooling module (22) according to any one of Claims 1 to 6, **characterized in that** the entire width (L) of the outlet (45) of the cooling module (22) is covered by at least one deflector grille (50).

8. Cooling module (22) according to any one of the preceding claims, **characterized in that** the blades (51) of the at least one deflector grille (50) have a curved cross section with a first concave wall (51a) facing the outlet (45) and a second convex wall (51b) facing away from the outlet (45).

9. Cooling module (22) according to the preceding claim, **characterized in that** the blades (51) comprise a leading edge (55a) by way of which the airflow (F) is intended to impinge against said blade (51), a trailing edge (55b) by way of which the airflow (F) is intended to be ejected by said blade (51), the thickness of the cross section of the blade (51) at said leading (55a) and trailing (55b) edges being less than the central thickness of the cross section of the blade (51).

10. Cooling module (22) according to the preceding claim, **characterized in that**, in the open position, the angle (α1) between the tangent (T1) to the leading edge (55a) of the blades (51) of the at least one deflector grille (50) and the velocity vector (V) of the airflow (F) is equal to the angle (α2) between the tangent (T1') to the trailing edge of the blades of the turbine (32) and the velocity vector (V) of the airflow (F) leaving said turbine (32).
